# EUROPEAN PATENT APPLICATION

(11) **EP 2 413 246 A1**
(43) Date of publication of application: **01.02.2012**
(21) Application number: 10755575.7
(22) Date of filing: 24.02.2010
(51) Int. Cl.: G06F 13/00, G06F 12/00, H04N 7/173

(54) **NETWORK CONTROL DEVICE, NETWORK CONTROL SYSTEM, NETWORK CONTROL METHOD, AND PROGRAM**

(30) Priority: 27.03.2009 JP 2009078386
(71) Applicant: Panasonic Corporation, Kadoma-shi Osaka 571-8501 (JP)
(72) Inventor: MATSUNAGA, Shigeki, Osaka-shi, Osaka 540-6207 (JP)
(74) Representative: Eisenführ, Speiser & Partner
(86) International application number: PCT/JP2010/001224
(87) International publication number: WO 2010/109768

(57) **Abstract**

A network control system enables a server to supply content information matching the functions and settings of a client device to the client device. The client has a profile generating unit that generates a client profile, and sends the generated client profile with a server request to the server, and a GUI generating unit that receives and displays content and content information as received. The server includes a client profile interpreting unit that interprets a client profile received from the client; a content information generating unit that generates content information appropriate to functions and settings of the client based on the interpreted client profile and content, and sends the content information to the client; and a storage unit that stores the content information.

## Description

### BACKGROUND OF THE INVENTION

### (1) Field of the Invention

The present invention relates to a network control device, a network control system, a network control method, and a program enabling a server device to generate content information in a home network system, and relates more particularly to a network control device, a network control system, a network control method, and a program enabling a server device to generate content information appropriate to the functions and settings of a client device.

### (2) Description of Related Art

Systems that transmit audio and video content between devices on a home network for listening and viewing are increasingly common. Such home network systems enable viewing content stored on a personal computer (PC) in a home library on a television (TV) in the living room. Japan Patent No. 3941700 teaches an information processing system in which a server device sends content information to a client device, and the client device displays the received content information in a list. This enables a user to see content information about the content available on the home network and select the content to be reproduced.

With the information processing device taught in Japan Patent No. 3941700, the server sends content information including the data format of the original content and the data format of the content that can be served to the client, and the client device displays the received content information together with information indicating if the content can be processed on the client side. One problem with this system is that because the server does not know the performance or settings of the client device, it cannot provide content information optimized for the client. Another problem is that data traffic increases because the server even sends content information that cannot be processed by the client to the client.

### BRIEF SUMMARY OF THE INVENTION

A network control device, a network control system, a network control method, and a program according to the invention enable a server device to provide content suitable to the functions and settings of the client device to the client, and reduce the amount of data traffic.

A first aspect of the invention is a network control device deployed as a client that acquires and reproduces content stored on a server, including: a profile generating unit that generates a client profile, and sends the generated client profile with a server request to the server; and a GUI (graphical user interface) generating unit that receives and displays content and content information including a virtual content tree corresponding to the client profile from the server.

Another aspect of the invention is a network control device deployed as a server that stores content and supplies the content to a client, including: a client profile interpreting unit that interprets a client profile received from the client; a content information generating unit that generates a virtual content tree appropriate to functions and settings of the client based on the interpreted client profile and content, generates content information including the virtual content tree, and sends the content information to the client; and a storage unit that stores the generated content information.

Another aspect of the invention is a network control device wherein: the client profile interpreting unit extracts the language setting of the client from the client profile; and the content information generating unit generates a virtual content tree including a virtual folder with a virtual folder name in the same language as the language setting of the client.

In a network control device according to another aspect of the invention, the client profile interpreting unit extracts formats that can be reproduced by the client from the client profile; and the content information generating unit extracts content of the same format as the format that can be reproduced by the client, and generates a virtual content tree including only the extracted content.

In a network control device according to another aspect of the invention, the content information generating unit deletes a virtual folder having no content.

In a network control device according to another aspect of the invention, the content information generating unit combines plural virtual folders when the plural virtual folders contain few content files.

A network control device according to another aspect of the invention also has a subtitle language detection unit that determines the subtitle language of a subtitle file. The client profile interpreting unit extracts the language setting of the client from the client profile; and the content information generating unit generates content information adding a storage address for the subtitle file of the same language as the language setting of the client to the storage address of the corresponding content.

Another aspect of the invention is a network control system including the network control device deployed as a client as described above, and the network control device deployed as a server as described above.

Another aspect of the invention is a network control method for a network control device deployed as a client that acquires and reproduces content stored on a server, including: a profile generating step of generating a client profile, and sends the generated client profile with a server request to the server; and a GUI (graphical user interface) generating step of receiving and displaying content and content information including a virtual content tree corresponding to the client profile from the server.

Another aspect of the invention is a network control method for a network control device deployed as a server that stores content and supplies the content to a client, including: a client profile interpreting step of interpreting a client profile received from the client; a content information generating step of generating a virtual content tree appropriate to functions and settings of the client based on the interpreted client profile and content, and generating content information including the virtual content tree; a storage step of storing the generated content information; and a content information transmission step of sending the generated content information to the client.

Another aspect of the invention is a program for controlling a network control device deployed as a client that acquires and reproduces content stored on a server, the program causing a computer to execute steps including: a profile generating step of generating a client profile, and sends the generated client profile with a server request to the server; and a GUI (graphical user interface) generating step of receiving and displaying content and content information including a virtual content tree corresponding to the client profile from the server.

Another aspect of the invention is a program for controlling a network control device deployed as a server that stores content and supplies the content to a client, the program causing a computer to execute steps including: a client profile interpreting step of interpreting a client profile received from the client; a content information generating step of generating a virtual content tree appropriate to functions and settings of the client based on the interpreted client profile and content, and generating content information including the virtual content tree; a storage step of storing the generated content information; and a content information transmission step of sending the generated content information to the client.

### Effect of the invention

A network control device, a network control system, a network control method, and a program according to the invention enable a client device to generate a client profile and send the client profile with a server request to the server. As a result, the server can provide content information matching the functions and settings of the client device to the client device. The amount of data sent from the server to the client can also be reduced.
Other objects and attainments together with a fuller understanding of the invention will become apparent and appreciated by referring to the following description and claims taken in conjunction with the accompanying drawings.

### BRIEF DESCRIPTION OF THE SEVERAL VIEWS OF THE DRAWINGS

FIG. 1 is a block diagram of the configuration of a network control system according to a first embodiment of the invention.
FIG. 2 is a block diagram of the configuration of a client device A in the network control system according to the first embodiment of the invention.
FIG. 3 shows an example of device profiles for client devices A to C in FIG. 1.
FIG. 4 is a block diagram showing the configuration of the server X in the network control system according to the first embodiment of the invention.
FIG. 5 shows communication between client device A and server X during the client profile acquisition process in the first embodiment of the invention.
FIG. 6 shows an example of a device discovery request and the client device A profile sent by client device A in step S101 in FIG. 5.
FIG. 7 shows the communication sequence between client device A and the server X in the virtual content tree generating and display process in the first embodiment of the invention.
FIG. 8 is a flow chart of the virtual content tree generating process of the server in a network control system according to the first embodiment of the invention.
FIG. 9 shows an example of the content database stored in the content manager of the server X shown in FIG. 4.
FIG. 10 shows an example of the virtual content tree produced for client device A in step S204 in FIG. 8.
FIG. 11 shows an example of the virtual content tree produced for client device B in step S204 in FIG. 8.
FIG. 12 shows an example of the virtual content tree produced for client device C in step S204 in FIG. 8.
FIG. 13 shows an example of a content selection screen displayed by the screen drawing unit of client device A in step S110 in FIG. 7.
FIG. 14 shows an example of a content selection screen displayed by the screen drawing unit of client device B in step S110 in FIG. 7.
FIG. 15 shows an example of a content selection screen displayed by the screen drawing unit of client device C in step S110 in FIG. 7.
FIG. 16 shows an example of a content database stored in the content manager of a server device according to a variation of the first embodiment of the invention.
FIG. 17 shows an example of a virtual content tree for client device B in a variation of the first embodiment of the invention.
FIG. 18 shows an example of a virtual content tree for client device C in a variation of the first embodiment of the invention.
FIG. 19 is a block diagram showing the configuration of a server X in a network control system according to a second embodiment of the invention.
FIG. 20 illustrates communication between the client device A and server X in the content information generation and content reproducing process in a second embodiment of the invention.
FIG. 21 is a flow chart of the content information generating process of the server X in the network control system according to the second embodiment of the invention.
FIG. 22 shows an example of the content database stored in the content manager of the server X shown in FIG. 19.

### DETAILED DESCRIPTION OF THE INVENTION

A network control system according to a preferred embodiment of the present invention is described below with reference to the accompanying figures. Note that like parts are identified by like reference numerals in the embodiments described below.

### Embodiment 1

This embodiment of the invention describes a network control system in which the client device ("client" below) generates a client profile and sends the client profile together with a request to the server device ("server" below), and the server generates a virtual content tree based on the acquired client profile and sends content information including the virtual content tree to the client.

### Configuration of a network control system

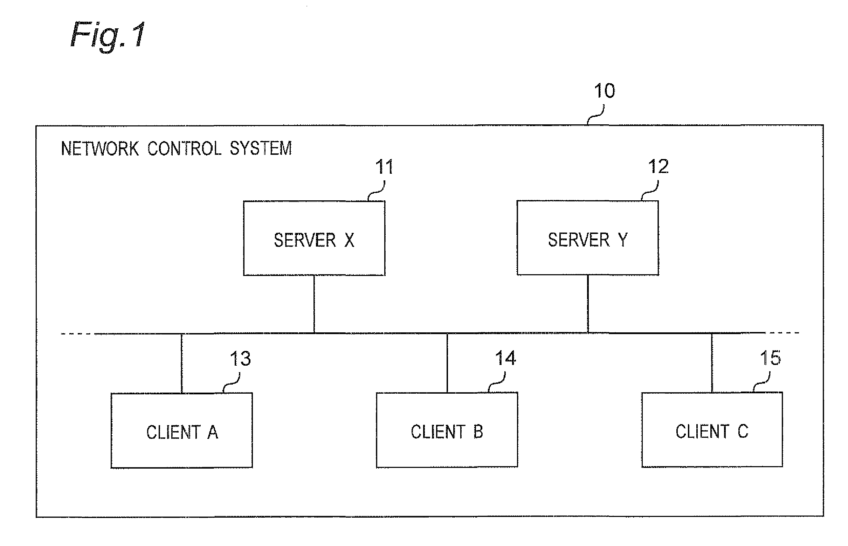

FIG. 1 shows the configuration of a network control system according to a first embodiment of the invention. As shown in FIG. 1, the network control system 10 includes a plurality of DLNA (Digital Living Network Alliance) servers (server X 11, server Y 12), and a plurality of DLNA clients (client A 13, client B 14, client C 15). The network control system 10 is a home network system. DLNA is one of the most common standards used for content transmission on a home network system.
In the DLNA standard a server device is called a DMS (digital media server), and a client device is called a DMP (digital media player). Server X 11 and server Y 12 store content, and may be, for example, a DVD (Digital Versatile Disk) recorder, BluRay (R) Disc recorder, DSC (digital still camera), or personal computer (PC), for example. Client A 13, client B 14, and client C 15 are devices that reproduce content acquired from a server, and may be a television or PC, for example.

### Server and client configuration

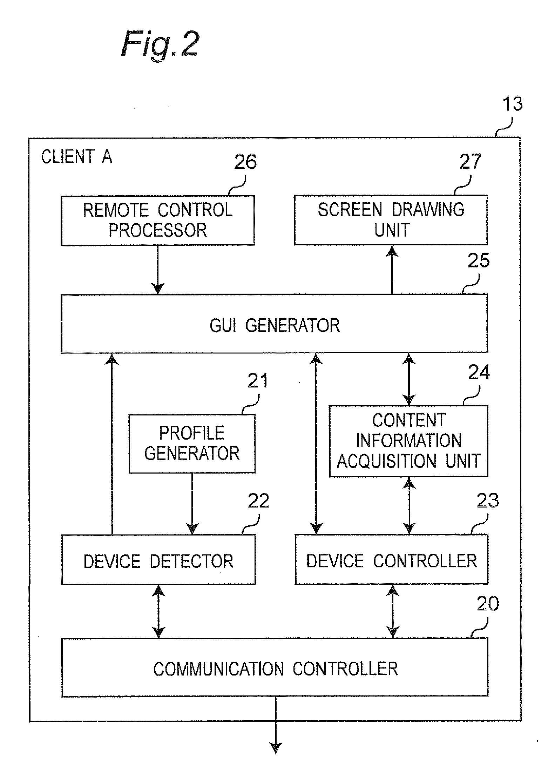

FIG. 2 shows the configuration of a client device A in the network control system according to the first embodiment of the invention. The client A 13 includes a communication controller 20, profile generator 21, device detector 22, device controller 23, content information acquisition unit 24, GUI generator 25, remote control processor 26, and screen drawing unit 27.

The communication controller 20 controls communication between the client A 13 and a server storing content using a TCP/IP protocol over Ethernet (R), wireless LAN, or Bluetooth (R).

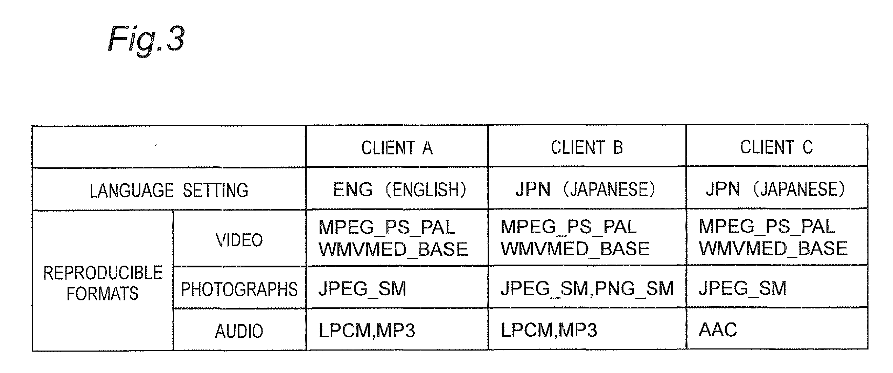

The profile generator 21 generates a profile of client A 13. FIG. 3 shows an example of profiles for clients A to C in FIG. 1. The profile of client A 13 shows that the language is set to English, the reproducible video formats are MPEG_PS_PAL, and WMVMED_BASE, the reproducible still image format is JPEG_SM, and the reproducible audio formats are LPCM and MP3.

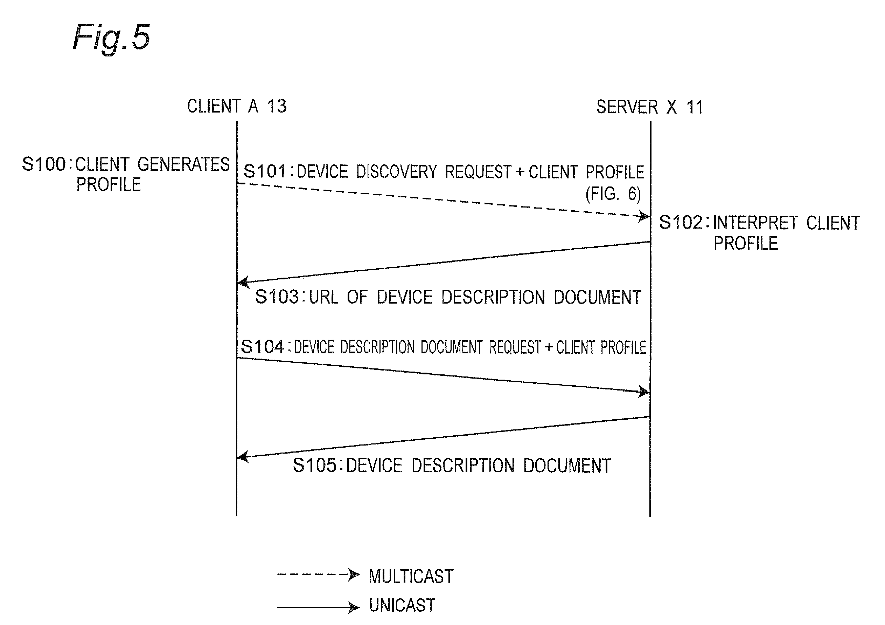

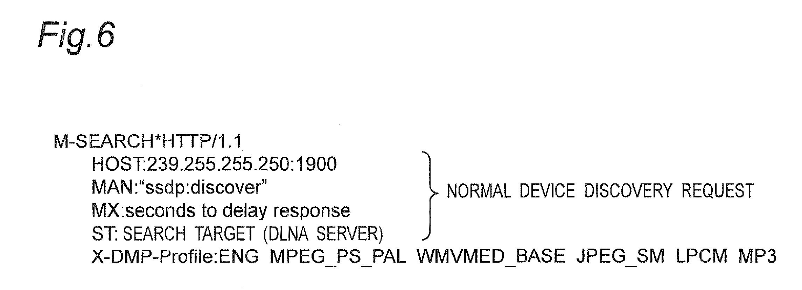

The device detector 22 transmits a search request for a server on the network and a profile of the client A 13 generated by the profile generator 21 over the communication controller 20 using the SSDP (Simple Service Discovery Protocol). The device detector 22 also receives a URL (Uniform Resource Locator) identifying where the Device Description Document (DDD) for the server is stored, and receives the DDD, from the server through the communication controller 20 as described in detail below with reference to FIG. 5 and FIG. 6.
The device detector 22 outputs the received Device Description Document for the server to the GUI (graphical user interface) generator 25.

Using SOAP (Simple Object Access Protocol), the device controller 23 sends a content information acquisition request and a content acquisition request to the server through the communication controller 20, and receives content information and content from the server through the communication controller 20.
The content information acquisition unit 24 acquires and interprets the content information received from the server.

When the server Device Description Document is input, the GUI generator 25 generates a GUI for a server list enabling the user to select a server, and when the interpreted content information is input, generates a GUI for a virtual content tree enabling the user to select content based on the interpreted content information. The GUI generator 25 also controls reproducing content when content is input.

The remote control processor 26 receives instructions from the user, including server selection commands, content selection commands, and stop content playback commands.
The screen drawing unit 27 outputs content input from the GUI generator 25 as audio and video.

The configuration of client A 13 is described with reference to FIG. 2, but client B 14 and client C 15 have the same configuration.

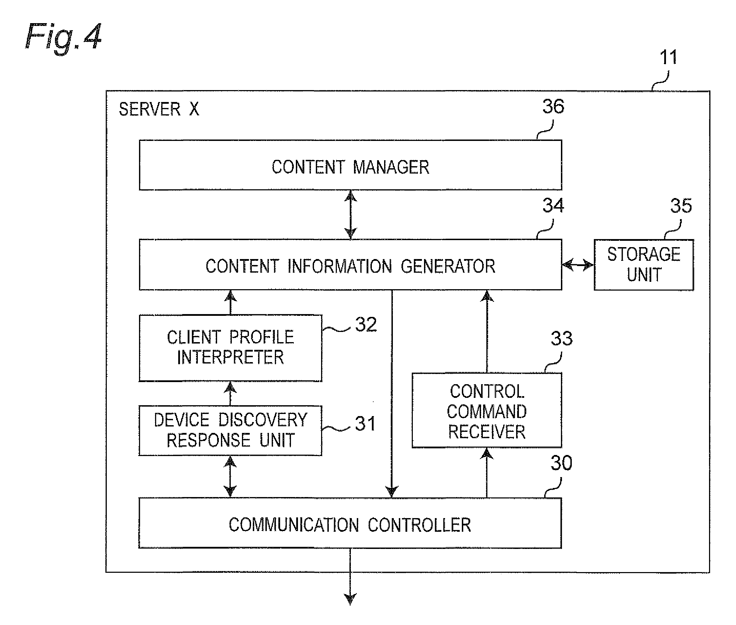

FIG. 4 shows the configuration of a server X in the network control system according to the first embodiment of the invention. The server X 11 includes a communication controller 30, device discovery response unit 31, client profile interpreter 32, control command receiver 33, content information generator 34, storage unit 35, and content manager 36.

The communication controller 30 controls communication between the server and the client reproducing the content using a TCP/IP protocol over Ethernet (R), wireless LAN, or Bluetooth (R).

The device discovery response unit 31 receives a server search request and client profile from a client device, returns the URL (device information) for where the Device Description Document of the server is stored, and sends the Device Description Document to the client as described in detail below with reference to FIG. 5.
The client profile interpreter 32 interprets the client profile received from the client, and outputs the interpreted profile information to the content information generator 34. The interpreted profile information is information telling the server that the language setting of client A is set to English, the reproducible video formats are MPEG_PS_PAL, and WMVMED_BASE, the reproducible still picture (photograph) format is JPEG_SM, and the reproducible audio formats are LPCM and MP3.

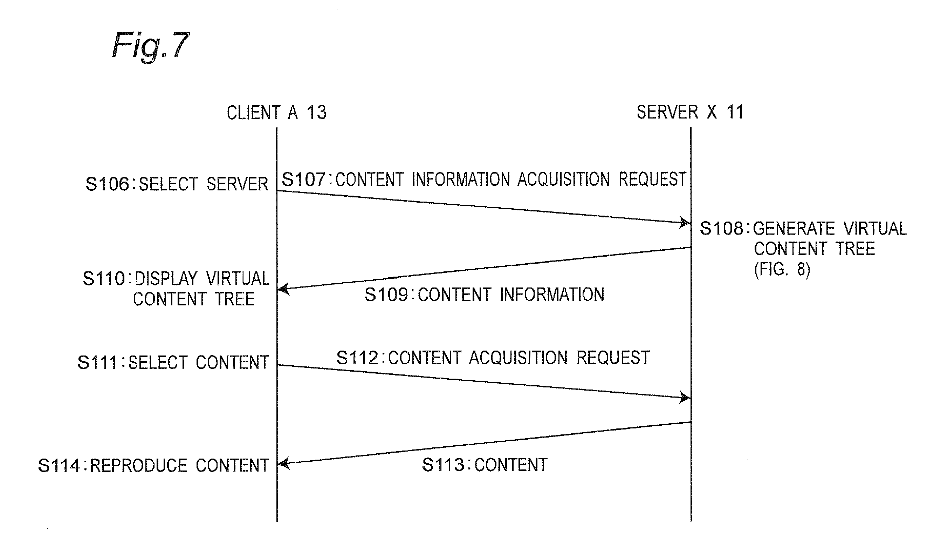

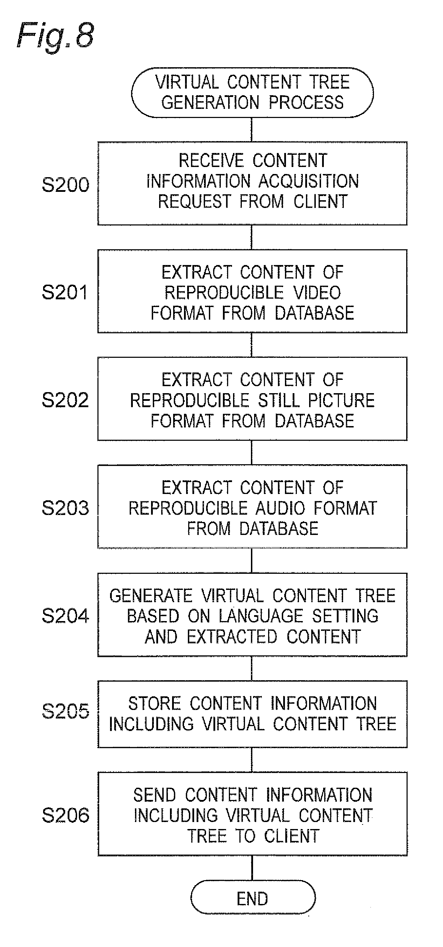

The control command receiver 33 receives control commands from the client. When the control command receiver 33 receives a content information acquisition request from a client, the content information generator 34 generates a virtual content tree based on the interpreted profile information and the content database of the content manager 36 as described in detail with reference to FIG. 7 and FIG. 8.
The content information generator 34 also stores content information including the virtual content tree in the storage unit 35, and sends content information including this virtual content tree to the client through the communication controller 30.
When the control command receiver 33 receives a content acquisition request from the client, content is read from the content database of the content manager 36 through the content information generator 34, and sends the read content to the client. The content manager 36 manages the content database that stores content.

FIG. 4 describes the configuration of server X 11, but server Y 12 has the same configuration.

### Client profile acquisition process

The client profile acquisition process executed between client A and server X in this first embodiment of the invention is described next with reference to FIG. 5.
The profile generator 21 of the client A 13 first generates a profile of client A 13 (S100). The device detector 22 of the client A 13 then outputs a device discovery request and client A 13 profile by multicast (S101). More specifically, the device detector 22 outputs to all devices in the home network system 10.

FIG. 6 shows an example of a device discovery request and client A profile sent by client A in step S101 in FIG. 5. A common SSDP device discovery request is contained in lines 1 to 5. More specifically, line 1 identifies the request as a device discovery request (an HTTP M-Search method); line 2 indicates that the request is a multicast (1-to-many) request by stating the multicast addresses to search for a device; and lines 3 to 5 say that the device to discover is a DLNA server (line 5), and to return (line 4) the response described in step S103 within the time specified as the "seconds to delay response" when the DLNA server receives this request. The specified time is, for example, 1 second.

Line 6 contains the profile of client A 13. SSDP allows adding any desired information by prepending "X-". The profile of client A 13 is therefore written by adding "X-DMP-Profile" as a unique header for device profiles. The language setting and reproducible format information is written in no particular order delimited by a single space.

Returning to FIG. 5, when the device discovery response unit 31 of the server X 11 receives the device discovery request and the profile of client A 13, the client profile interpreter 32 of the server X 11 interprets the received profile of the client A 13 (S102). As the response to the device discovery request, the device discovery response unit 31 of the server X 11 returns the URL for the location of the Device Description Document (DDD) of the server X 11 by unicast (1:1 communication) (S103).

The device detector 22 of the client A 13 that received the URL of the server X 11 Device Description Document then sends the DDD request and client A 13 profile by unicast to the server X 11 (S104). A DDD request is executed by sending an HTTP Get method to the URL of the Device Description Document received in step S103. More specifically, the DDD request is a command for accessing the URL where the Device Description Document is stored, and acquiring the Device Description Document stored at that address. In response to this request, the device discovery response unit 31 of the server X 11 sends the Device Description Document of the server X 11 stored at the URL received in step S104 to the client A 13 by unicast (S105).

The server can therefore know the functions and settings of the client as a result of the client sending the client profile with the device discovery request.

### Virtual content tree generation and display process

FIG. 7 describes communication between client A and server X in the virtual content tree generation and display process in the first embodiment of the invention. The device detector 22 of the client A 13 that received the server X 11 Device Description Document in step S105 in FIG. 5 outputs the received server X 11 Device Description Document to the GUI generator 25.
The GUI generator 25 generates a GUI for a server list based on the Device Description Document of the server X 11, and outputs the generated GUI for the server list to the screen drawing unit 27. Using a remote control device, the user selects the server from which content is to be reproduced from the server list presented by the screen drawing unit 27 (S106).
When the remote control processor 26 receives a server selection command from the user, it outputs the command to the GUI generator 25. Server X 11 is selected in this example. The GUI generator 25 outputs the selection of server X 11 to the device controller 23, and the device controller 23 sends a content information acquisition request to the server X 11 to learn what content is available on the server X 11 (S107). The server X 11 that receives the content information acquisition request then generates a virtual content tree (S108). The virtual content tree generation process is described in detail below with reference to FIG. 8.

FIG. 8 is a flow chart of the virtual content tree generation process (a flow chart of step S108 in FIG. 7) executed by a server in the network control system according to the first embodiment of the invention.
The control command receiver 33 of the server X 11 first receives a content information acquisition request from the client A 13 (S200).
The content information generator 34 then extracts content with the same format as the reproducible video format contained in the interpreted profile information from the content database of the content manager 36 (S201).
Next, the content information generator 34 extracts content with the same format as the reproducible still picture format contained in the interpreted profile information from the content database of the content manager 36 (S202).
The content information generator 34 then extracts content with the same format as the reproducible audio format contained in the interpreted profile information from the content database of the content manager 36 (S203).

The content information generator 34 generates a virtual content tree based on the language setting in the interpreted profile information and the content extracted in steps S201 to S203 (S204). The content information generator 34 stores content information including the generated virtual content tree in the storage unit 35 (S205). The content information generator 34 then sends the content information including the virtual content tree through the communication controller 30 to the client A 13 (S206).

Returning to FIG. 7, when content information is sent from the server X 11 to the client A 13 (S109), the content information acquisition unit 24 of the client A 13 acquires and interprets the content information. Based on the interpreted content information, the GUI generator 25 generates a GUI for the virtual content tree enabling the user to select content, and outputs the virtual content tree GUI to the screen drawing unit 27.
The screen drawing unit 27 displays the virtual content tree (S110). Using the remote control device, the user selects the content to be reproduced from the virtual content tree displayed by the screen drawing unit 27 (S111). When the remote control processor 26 receives a content selection command from the user, it outputs the command to the GUI generator 25. The GUI generator 25 then outputs content information for the selected content to the device controller 23, and the device controller 23 sends a get request for the content to the server X 11 (S112). The server X 11 sends the requested content to the client A 13 (S113). The client A 13 then reproduces the received content (S114).

The above virtual content tree generation process is described more specifically below with reference to FIG. 3 and FIG. 9 to FIG. 12.

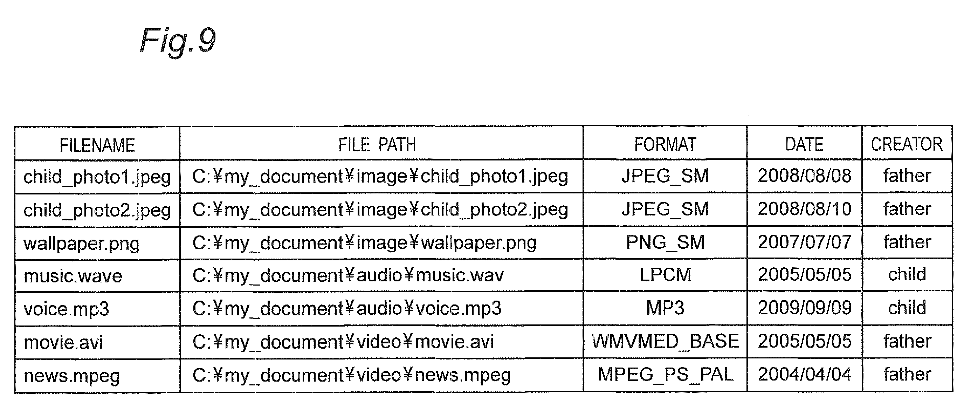

FIG. 9 shows an example of a content database stored in the content manager of the server X in FIG. 4.
When client A 13 has a profile as shown in FIG. 3, the content information generator 34 searches the content database (FIG. 9) for content having the same format as the video formats (MPEG_PS_PAL and WMVMED_BASE) that can be reproduced by the client A 13, and extracts the content "movie" and "newts" (S201).
The content information generator 34 also searches the content database (FIG. 9) for content having the same format as the still picture format (JPEG_SM) that can be reproduced by the client A 13, and extracts the content "child_photo1" and "child_photo2" (S202).
The content information generator 34 also searches the content database (FIG. 9) for content having the same format as the audio formats (LPCM and MP3) that can be reproduced by the client A 13, and extracts the content "music" and "voice" (S203).

Based on the language setting and the content extracted in steps S201 to S203, the content information generator 34 generates a virtual content tree for the client A 13 (S204).

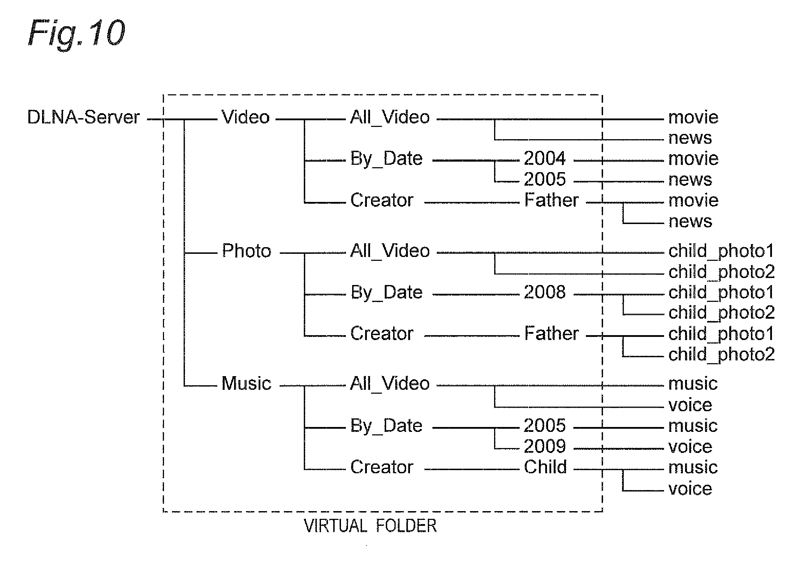

FIG. 10 shows an example of the virtual content tree for client A generated in step S204 in FIG. 8. Because the language of the client A 13 is set to English, the virtual folder names are also in English.

When client B 14 has a profile as shown in FIG. 3, the content information generator 34 searches the content database (FIG. 9) for content having the same format as the video formats (MPEG_PS_PAL, WMVMED_BASE) that can be reproduced by the client B 14, and extracts the content "movie" and "newts" (S201).
The content information generator 34 also searches the content database (FIG. 9) for content having the same format as the still picture format (JPEG_SM, PNG_SM) that can be reproduced by the client B 14, and extracts the content "child_photo1", "child_photo2", and "wallpaper" (S202).
The content information generator 34 also searches the content database (FIG. 9) for content having the same format as the audio formats (LPCM and MP3) that can be reproduced by the client B 14, and extracts the content "music" and "voice" (S203).

Based on the language setting and the content extracted in steps S201 to S203, the content information generator 34 then generates a virtual content tree for client B 14 (S204).

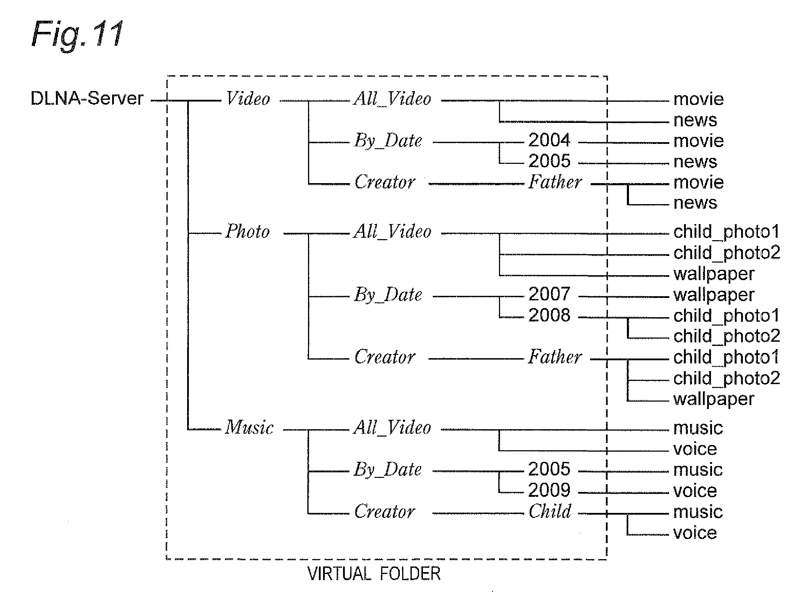

FIG. 11 (in which the italic letters are written in Japanese characters) shows an example of the virtual content tree for client B generated in step S204 in FIG. 8. Because the language of the client B 14 is set to Japanese, the virtual folder names are also in Japanese.

When client C 15 has a profile as shown in FIG. 3, the content information generator 34 searches the content database (FIG. 9) for content having the same format as the video formats (MPEG_PS_PAL, WMVMED_BASE) that can be reproduced by the client C 15, and extracts the content "movie" and "newts" (S201).
The content information generator 34 also searches the content database (FIG. 9) for content having the same format as the still picture format (JPEG_SM, PNG_SM) that can be reproduced by the client C 15, and extracts the content "child_photo1", "child_photo2", and "wallpaper" (S202).
The content information generator 34 also searches the content database (FIG. 9) for content having the same format as the audio format (AAC) that can be reproduced by the client C 15, but extracts nothing because there is no matching content (S203).

Based on the language setting and the content extracted in steps S201 to S203, the content information generator 34 then generates a virtual content tree for client C 15 (S204).

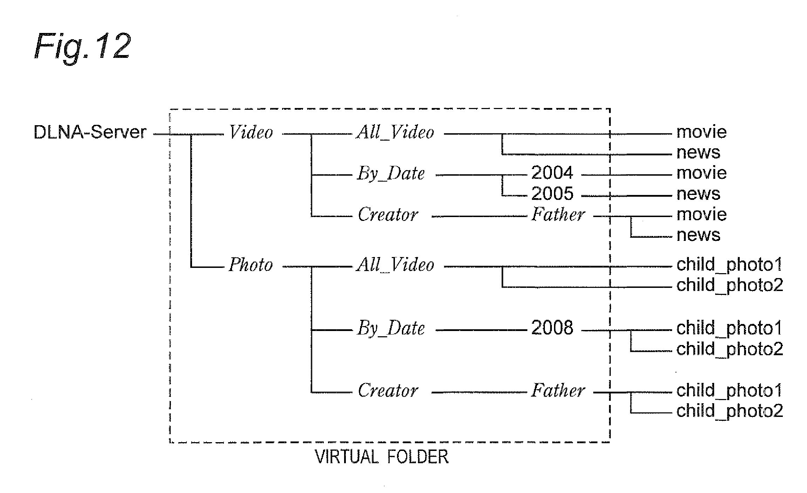

FIG. 12 (in which the italic letters are written in Japanese characters) shows an example of the virtual content tree for client C generated in step S204 in FIG. 8. Because the language of the client C 15 is set to Japanese, the virtual folder names are also in Japanese. The virtual folder for "music" is also deleted because there is no music content in the format that can be reproduced by the client C 15.

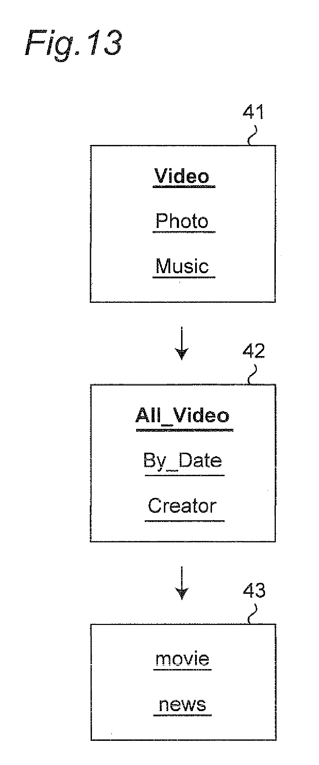

FIG. 13 shows an example of a content selection tree displayed by the screen drawing unit of client A in step S110 in FIG. 7. The virtual folders Video, Photo, and Music are displayed on the first level of the virtual content tree (FIG. 10) of client A 13 in screen 41.
When Video is selected from screen 41, screen 42 is displayed. The virtual folders All_Video, By_Date, and Creator are displayed in screen 42 on the second level below the Video folder of the virtual content tree (FIG. 10) of the client A 13. When All_Video is selected in screen 42, screen 43 is displayed.
The files (content) "movie" and "newts" in the All_Video folder of the virtual content tree (FIG. 10) of the client A 13 are displayed in screen 43.

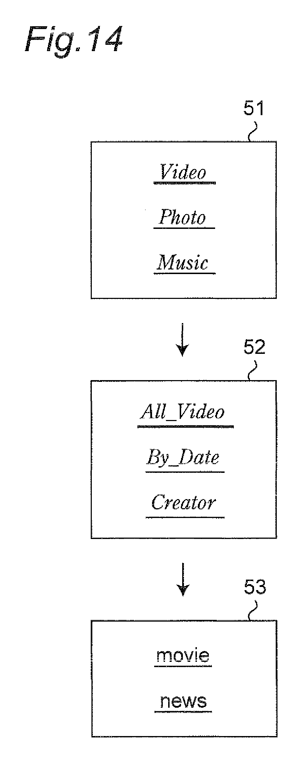

FIG. 14 (in which the italic letters are written in Japanese characters) shows an example of a content selection tree displayed by the screen drawing unit of client B in step S110 in FIG. 7. The virtual folders Video, Photo, and Music are displayed (in Japanese) on the first level of the virtual content tree (FIG. 11) of client B 14 in screen 51.
When Video (in Japanese) is selected from screen 51, screen 52 is displayed. The virtual folders All_Video, By_Date, and Creator are displayed (in Japanese) in screen 52 on the second level below the Video folder of the virtual content tree (FIG. 11) of client B 14. When All_Video is selected in screen 52, screen 53 is displayed.
The files (content) "movie" and "newts" in the All_Video folder of the virtual content tree (FIG. 11) of the client A 13 are displayed in screen 53.

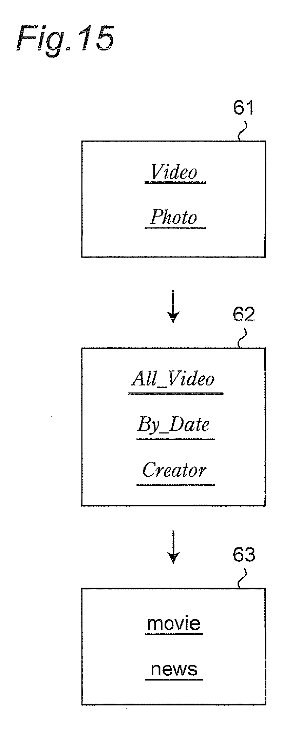

FIG. 15 (in which the italic letters are written in Japanese characters) similarly shows a content selection screen displayed by the screen drawing unit of client C in step S110 in FIG. 7. The virtual folders Video, Photo, and Music are displayed (in Japanese) on the first level of the virtual content tree (FIG. 12) of client C 15 in screen 61. When Video (in Japanese) is selected from screen 61, screen 62 is displayed. Screen 62 and screen 63 are identical to screen 52 and screen 53 in FIG. 14, and further description thereof is om itted.

As described above, in a network control system according to this embodiment of the invention, a client device generates a client profile, and sends the client profile with a server request to the server. The server generates a virtual content tree based on the received client profile, and sends content information including a virtual content tree to the client. As a result, the server can provide content information matching the functions and settings of the client to the client. The amount of data sent from the server to the client can also be reduced.

### Variation of the embodiment

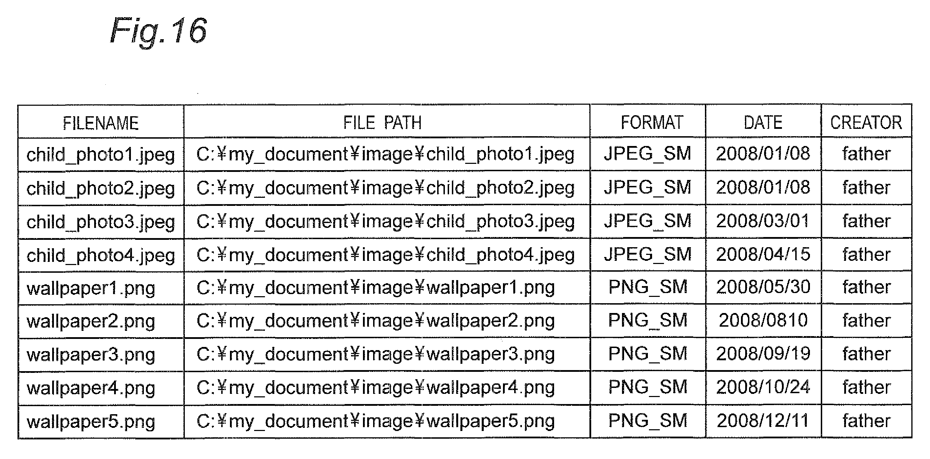

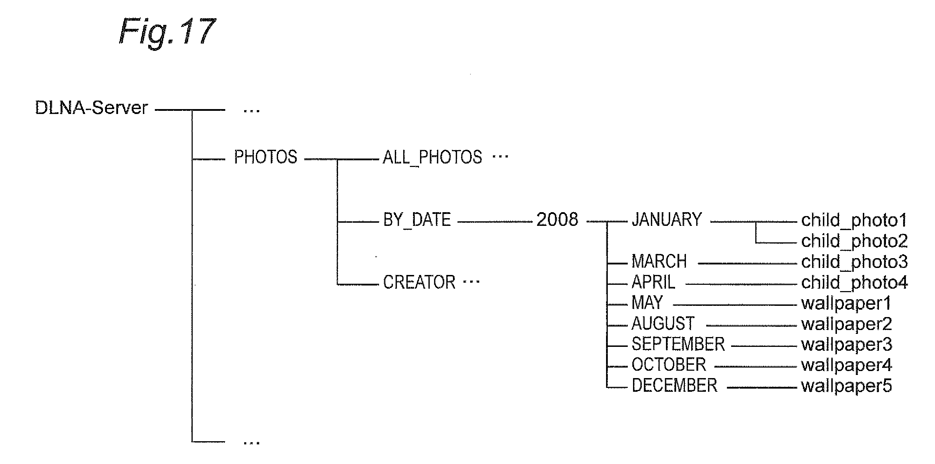

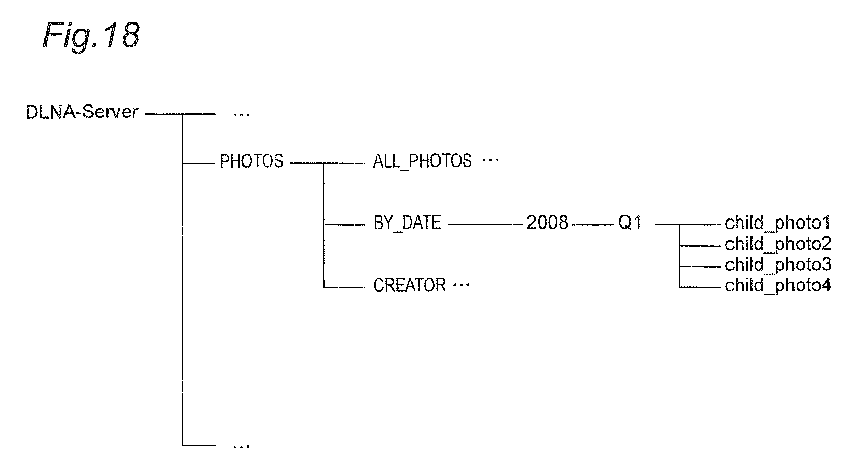

FIG. 16 shows an example of a content database stored in the server in a variation of the first embodiment of the invention. When client B 14 has a profile as shown in FIG. 3, the content information generator 34 generates a virtual content tree for the client B 14. FIG. 17 shows an example of a virtual content tree for client B
When client C 15 has a profile as shown in FIG. 3, the content information generator 34 generates a virtual content tree for client C 15. FIG. 18 shows an example of the virtual content tree for client C in this variation. When the number of content files is small, the virtual folders can be combined into a single folder as shown in FIG. 18.

The server can thus provide to the client content information that even better matches the functions of the client.

This embodiment of the invention sends a profile of the client device together with a device discovery request (step S101 in FIG. 5) and Device Description Document request (step S104 in FIG. 5) to the server, but could send the client profile to the server with the content information acquisition request (step S107 in FIG. 7). In this case the profile generator 21 of client A in FIG. 2 outputs the profile generated for the client (client profile) to the device controller 23. Using SOAP, the device controller 23 also sends the client profile when sending the content information acquisition request. When the control command receiver 33 of the server X 11 in FIG. 4 receives a client profile, it outputs the received client profile to the client profile interpreter 32.

### Embodiment 2

This embodiment describes a network control system in which the server looks for a subtitle file in the same language as the language setting of the client based on the acquired client profile, and sends to the client content information including a URL for the subtitle file in addition to the URL for the content.

### Configuration of the network control system

The configuration of a network control system according to this embodiment of the invention is the same as in the first embodiment, and further description thereof is thus omitted.

### Server and client configurations

The configuration of a client device of a network control system according to this embodiment of the invention is the same as in the first embodiment, and further description thereof is thus omitted.

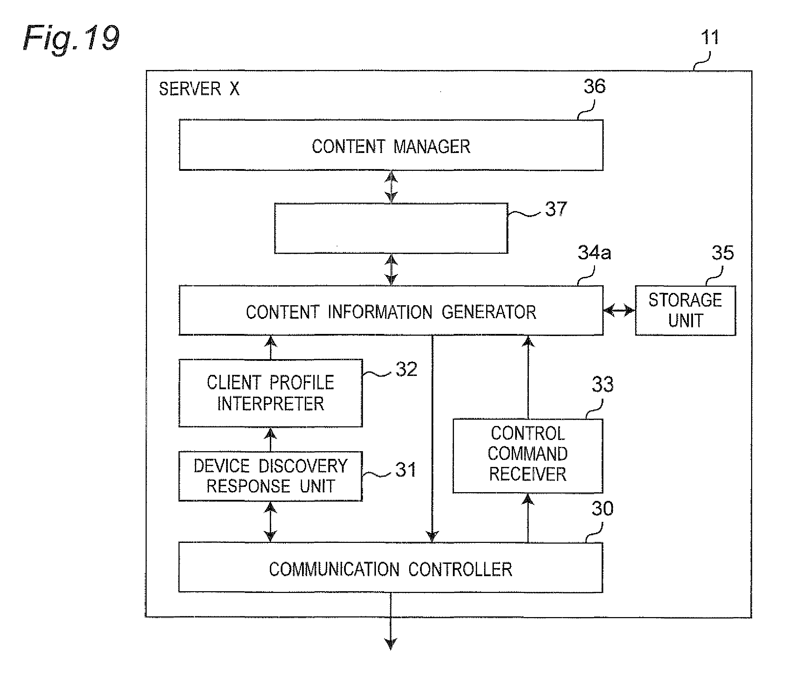

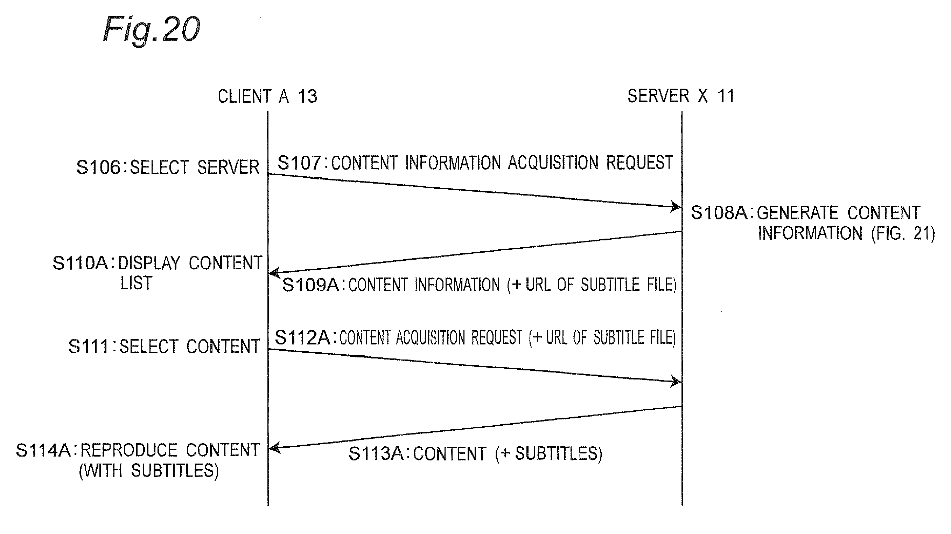

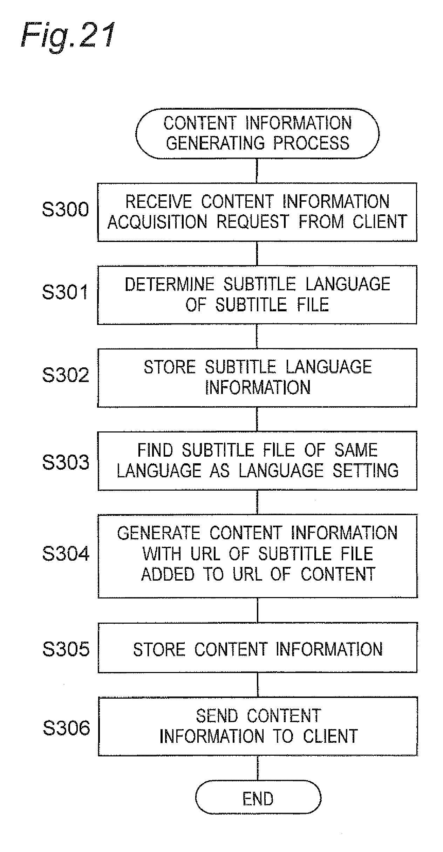

FIG. 19 shows the configuration of a server X in the network control system according to the second embodiment of the invention. This server X 11 also has a subtitle language detection unit 37, and a content information generator 34a instead of the content information generator 34 described above.
The subtitle language detection unit 37 determines the subtitle language of the subtitle file and stores subtitle language information in the storage unit 35.
The content information generator 34a generates content information based on the interpreted profile information, subtitle language information, and the content database of the content manager 36 as described in detail below with reference to FIG. 20 and FIG. 21.
Other than the subtitle language detection unit 37 and content information generator 34a, the configuration of the server X 11 according to this embodiment of the invention is the same as in the first embodiment, and further description thereof is om itted.

FIG. 19 describes the configuration of server X 11, but server Y 12 is configured the same.

### Client profile acquisition process

The client profile acquisition process in this embodiment of the invention is identical to the first embodiment, and further description thereof is omitted.

### Content information generation and content reproduction process

The content information generation and content reproduction process executed between client A and server X in this embodiment of the invention is described next with reference to FIG. 20.
The device detector 22 of the client A 13 that received the server X 11 Device Description Document in step S105 in FIG. 5 outputs the Device Description Document received for the server X 11 to the GUI generator 25. The GUI generator 25 generates a GUI for a server selection list based on the Device Description Document of the server, and outputs the server list GUI to the screen drawing unit 27. Using a remote control, the user selects the server from which to reproduce content from the server list displayed by the screen drawing unit 27 (S106).
When the remote control processor 26 receives a server selection command from the user, it outputs the command to the GUI generator 25. Server X 11 is selected in this example. The GUI generator 25 outputs the selection of server X 11 to the device controller 23, and the device controller 23 sends a content information acquisition request to the server X 11 (S107). The server X 11 that receives the content information acquisition request then generates a content information (S108A). The content information generation process is described in detail below with reference to FIG. 21.

FIG. 21 shows a flow chart of the content information generation process executed by the server in a network control system according to the second embodiment of the invention.
The control command receiver 33 of the server X 11 first receives the content information acquisition request from the client A 13 (S300). Next, the subtitle language detection unit 37 extracts the subtitle file from the content database of the content manager 36 and determines the subtitle language of the extracted subtitle file (S301), and stores the detected subtitle language information in the storage unit 35 (S302). Next, the content information generator 34a searches for a subtitle file of the same language set in the interpreted profile information (S303). If there is a subtitle file in the same language as the language setting, the content information generator 34a generates content information adding the URL of the subtitle file to the URL of the corresponding content (S304). The content information generator 34a stores the content information in the storage unit 35 (S305). The content information generator 34a then sends the content information through the communication controller 30 to the client A 13 (S306).

Returning to FIG. 20, when content information including the URL of the subtitle file is sent from the server X 11 to the client A 13 (S109A), the content information acquisition unit 24 of the client A 13 gets and interprets the content information.
The GUI generator 25 generates a GUI for a content list enabling the user to select the desired content based on the interpreted content information, and outputs the content list GUI to the screen drawing unit 27. The screen drawing unit 27 then displays the content list (S110A).
Using a remote control, the user then selects the content to be reproduced from the content list displayed by the screen drawing unit 27 (S111). When the remote control processor 26 receives a content selection from the user, it outputs the instruction to the GUI generator 25. The GUI generator 25 then outputs content information for the selected content to the device controller 23, and the device controller 23 transmits a content acquisition request (S112A).

When a URL for the subtitle file is not added to the URL of the selected content, the device controller 23 sets the URL for the content in the content information as a parameter. More specifically, the content acquisition request is a command for accessing the URL of the content and acquiring the content data stored at that URL. When a URL for a subtitle file is added to the URL of the selected content, the device controller 23 sets the URL of the content and the URL of the subtitle file in the content information as parameters. More specifically, the content acquisition request in this case is a command for accessing the URL of the content and the URL of the subtitle file, and acquiring the content data and subtitle file stored at those locations.

When the server X 11 receives only a URL for the content, it sends only the content data to the client A 13 (S113A). If the server X 11 receives a content URL and a subtitle file URL, it sends both the content data and subtitle data to the client A 13 (S113A).
If the client A 13 receives only content data, it reproduces the content (S114A). If the client A 13 receives both content data and subtitle data, it reproduces the content with subtitles (S114A).

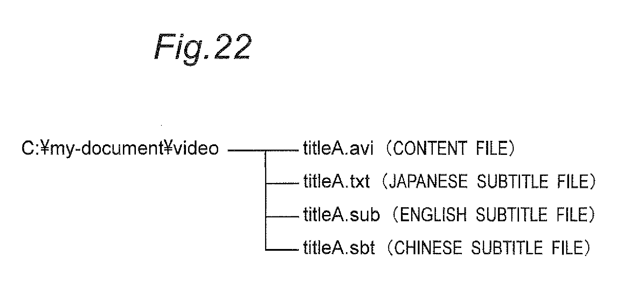

The above content information generation and content reproduction process is described more specifically below with reference to FIG. 22. FIG. 22 shows an example of a content database stored in the content manager of server X in FIG. 19. Content file titleA.avi, Japanese subtitle file titleA.txt, English subtitle file titleA.sub, and Chinese subtitle file titleA.sbt are stored in the video folder of server X. Client B 14, for which the language is set to Japanese, is described below.

The subtitle language detection unit 37 of client B 14 extracts subtitle files titleA.txt, titleA.sub, and titleA.sbt from the content database of the content manager 36. In addition, the subtitle language detection unit 37 determines the subtitle language of each extracted subtitle file (S301). More specifically, subtitle language of titleA.txt is Japanese, the subtitle language of titleA.sub is English, and the subtitle language of titleA.sbt is Chinese. Subtitle files can be identified from the filename extension, but the subtitle language cannot be determined from the filename extension. The subtitle language is therefore determined by checking the content of the subtitle file.
The subtitle language detection unit 37 stores the subtitle language information in the storage unit 35 (S302). The content information generator 34a then looks for the subtitle file in the same language, Japanese, as the language setting of the client B 14 (S303). The content information generator 34a extracts the Japanese subtitle file titleA.txt, and generates content information adding the url of the subtitle file (http://.../titleA.txt) to the URL of the content (http://.../titleA.avi) (S304).

As described above, in a network control system according to this embodiment of the invention, a client device generates a client profile, and sends the client profile with a server request to the server. The server looks for a subtitle file in the same language as the language setting of the client based on the received client profile, and sends content information including a URL for the subtitle file and the URL for the content to the client. As a result, because a subtitle file of the same language as the language setting of the client is extracted and sent with the content to the client when plural subtitle files are available for the same content, the user can view the content with subtitles in the same language as the language setting of the client.

This embodiment of the invention sends a profile for the client device together with the device discovery request (step S101 in FIG. 5) and Device Description Document request (step S104 in FIG. 5), but the client profile could be transmitted with the content information acquisition request (step S107 in FIG. 20). In this case the profile generator 21 of client A in FIG. 2 outputs the profile generated for the client (client profile) to the device controller 23. Using SOAP, the device controller 23 also sends the client profile when sending the content information acquisition request. When the control command receiver 33 of the server X 11 in FIG. 4 receives a client profile, it outputs the received client profile to the client profile interpreter 32.

When a subtitle file of the same language as the language setting is found in the content information generation process in step S108A in FIG. 20, this embodiment of the invention adds the URL for the subtitle file to the URL of the content. Alternatively, the server X 11 could look among the subtitle files of the selected content for a subtitle file in the same language as the language setting after receiving a content acquisition request in step S112A in FIG. 20, and send the subtitle data with the content data to the client A 13 when a subtitle file is found. In this case, the client profile could be sent with the content information acquisition request (step S112A in FIG. 20) instead of in step S101 and S104 in FIG. 5.

Note, further, that the virtual content tree generation and display process of the first embodiment can also be added to this embodiment of the invention.

### Use in Industry

A network control system according to the invention enables a server to supply content information matching the functions and settings of a client device to the client, and can be used in a network control system such as used in a home network system deployed in the home.
The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

## Claims

1. A network control device deployed as a client that acquires and reproduces content stored on a server, comprising:
a profile generating unit that generates a client profile, and sends the generated client profile with a server request to the server; and
a GUI (graphical user interface) generating unit that receives and displays content and content information including a virtual content tree corresponding to the client profile from the server.

2. A network control device deployed as a server that stores content and supplies the content to a client, comprising:
a client profile interpreting unit that interprets a client profile received from the client;
a content information generating unit that generates a virtual content tree appropriate to functions and settings of the client based on the interpreted client profile and content, generates content information including the virtual content tree, and sends the content information to the client; and
a storage unit that stores the generated content information.

3. The network control device described in claim 2, wherein:
the client profile interpreting unit extracts the language setting of the client from the client profile; and
the content information generating unit generates a virtual content tree including a virtual folder with a virtual folder name in the same language as the language setting of the client.

4. The network control device described in claim 3, wherein:
the client profile interpreting unit extracts formats that can be reproduced by the client from the client profile; and
the content information generating unit extracts content of the same format as the format that can be reproduced by the client, and generates a virtual content tree including only the extracted content.

5. The network control device described in any one of claims 2 to 4, wherein:
the content information generating unit deletes a virtual folder having no content.

6. The network control device described in any one of claims 2 to 5, wherein:
the content information generating unit combines plural virtual folders when the plural virtual folders contain few content files.

7. The network control device described in claim 2, further comprising:
a subtitle language detection unit that determines the subtitle language of a subtitle file;
wherein the client profile interpreting unit extracts the language setting of the client from the client profile; and
the content information generating unit generates content information adding a storage address for the subtitle file of the same language as the language setting of the client to the storage address of the corresponding content.

8. A network control system comprising:
the network control device deployed as a client as described in claim 1; and
the network control device deployed as a server as described in claim 2.

9. A network control method for a network control device deployed as a client that acquires and reproduces content stored on a server, comprising:
a profile generating step of generating a client profile, and sends the generated client profile with a server request to the server; and
a GUI (graphical user interface) generating step of receiving and displaying content and content information including a virtual content tree corresponding to the client profile from the server.

10. A network control method for a network control device deployed as a server that stores content and supplies the content to a client, comprising:
a client profile interpreting step of interpreting a client profile received from the client;
a content information generating step of generating a virtual content tree appropriate to functions and settings of the client based on the interpreted client profile and content, and generating content information including the virtual content tree;
a storage step of storing the generated content information; and
a content information transmission step of sending the generated content information to the client.

11. A program for controlling a network control device deployed as a client that acquires and reproduces content stored on a server, the program causing a computer to execute steps including:
a profile generating step of generating a client profile, and sends the generated client profile with a server request to the server; and
a GUI (graphical user interface) generating step of receiving and displaying content and content information including a virtual content tree corresponding to the client profile from the server.

12. A program for controlling a network control device deployed as a server that stores content and supplies the content to a client, the program causing a computer to execute steps including:
a client profile interpreting step of interpreting a client profile received from the client;
a content information generating step of generating a virtual content tree appropriate to functions and settings of the client based on the interpreted client profile and content, and generating content information including the virtual content tree;
a storage step of storing the generated content information; and
a content information transmission step of sending the generated content information to the client.
